# EUROPEAN PATENT APPLICATION

(11) **EP 3 393 063 A1**
(43) Date of publication of application: **24.10.2018**
(21) Application number: 16875801.9
(22) Date of filing: 16.12.2016
(51) Int. Cl.: H04B 11/00

(54) **INFORMATION PROVIDING DEVICE AND INFORMATION PROVIDING SYSTEM**

(30) Priority: 18.12.2015 JP 2015247441
(71) Applicant: DENSO CORPORATION, Kariya-shi, Aichi 448-8661 (JP)
(72) Inventor: NAKAYAMA, Toshiaki, Kariya-shi Aichi 448-8661 (JP); INOUE, Toru, Kariya-shi Aichi 448-8661 (JP)
(74) Representative: Kuhnen & Wacker Patent- und Rechtsanwaltsbüro PartG mbB
(86) International application number: PCT/JP2016/087633
(87) International publication number: WO 2017/104827

(57) **Abstract**

An information provision apparatus (10, 60) according to an aspect of the present disclosure includes: an information signal generator unit (11) that generates an information signal containing information on a provision target; a converter unit (13) that converts the generated information signal into a sound wave and outputs the sound wave; and a wireless communicator unit (14) that performs wireless transmission and reception of data with a communication apparatus (50). Further, the information provision apparatus is enabled to receive an activation signal transmitted using a specific wireless transmission medium from a signal output apparatus (40). In response to that the activation signal is received, the information provision apparatus transitions into a state enabling wireless transmission and reception of data with the communication apparatus (50).

## Description

### CROSS REFERENCE TO RELATED APPLICATION

The present application claims the right of priority based on Japanese Patent Application No. 2015-247441 filed on December 18, 2015, the disclosure of which is incorporated herein by reference.

### TECHNICAL FIELD

The present disclosure relates to an information provision apparatus and an information provision system which provide the information using sound waves.

### BACKGROUND ART

There are proposed several technologies that provide the information using sound waves. Patent literature 1 describes a system that includes a transmission apparatus which transmits ultrasonic waves containing the position information, and a portable terminal which receives the ultrasonic waves transmitted from the transmission apparatus and detects the position information included in the ultrasonic waves.

### PRIOR ART LITERATURES

### PATENT LITERATURE

Patent literature 1: JP 2006-058164 A

### SUMMARY OF INVENTION

The transmission apparatus which transmits a variety of information using sound waves needs adjustment works from time to time such as updating contents of the information for provision or controlling operations of the apparatus. Methods performing efficiently the various adjustment works for a transmission apparatus may include a method which performs wirelessly the various adjustment works remotely from a communication apparatus other than the transmission apparatus.

In order to perform effectively the various adjustment works wirelessly as needed, it is desirable to maintain the transmission apparatus constantly under the state enabling the wireless communication. Results of the inventors' detailed study have found that maintaining the transmission apparatus constantly under the state enabling the wireless communication may encounter unlawful wireless accesses and pose an issue in security.

A method suppressing unlawful accesses may be supposed which provides the transmission apparatus with a switch that is manipulated for turning on or off of the function of the wireless communication with the communication apparatus; the switch is usually turned off to disable the wireless communication function.

Results of the inventors' detailed study have also found that such a method may however pose other issues. That is, each time an adjustment work is performed using the communication apparatus, an operator needs to manipulate the switch to turn on the wireless communication function before the adjustment work and to thereafter manipulate the switch again to turn off the wireless communication function after the adjustment work. This causes greatly troublesome and inefficient works. In addition, turning off of the switch being turned on may be forgotten; the switch may be turned on by a malicious third person without permission. Furthermore, a switch in a transmission apparatus that is installed in a position such as a ceiling which people's hands do not reach easily may be not operated easily.

An aspect of the present disclosure is preferably provided which performs effectively a remote work wirelessly from an external communication apparatus to an information provision apparatus providing the information using sound waves while suppressing the decline in the security performance of the information provision apparatus.

An information provision apparatus according to an aspect of the present disclosure is configured to provide the information using sound waves while including a wireless communicator unit, an information signal generator unit, a converter unit, a receiver unit, and an operation controller unit. The wireless communicator unit is configured to be enabled to perform wireless transmission and reception with a communication apparatus other than the information provision apparatus. The information signal generator unit is enabled to perform data communication through the wireless communicator unit while generating an information signal containing the information on a provision target. The converter unit is configured to convert an information signal generated by the information signal generator unit into a sound wave and to output the sound wave. The receiver unit is configured to be enabled to receive a signal transmitted using a specific wireless transmission medium from a signal output apparatus other than the information provision apparatus. The operation controller unit is configured to execute an operation control process which controls an operation state of the wireless communicator unit based on a signal received by the receiver unit. The operation controller unit includes an activation process which enables the wireless communicator unit to perform wireless transmission and reception of data with the communication apparatus in response to that an activation signal transmitted from the signal output apparatus is received by the receiver unit.

An information provision system according to another aspect of the present disclosure includes an information provision apparatus configured to provide information using a sound wave, and a signal output apparatus configured to be enabled to transmit a signal using a specific wireless transmission medium to the information provision apparatus.

The information provision apparatus, which has a configuration that is identical to that of the above-mentioned information provision apparatus, includes a wireless communicator unit, an information signal generator unit, a converter unit, a receiver unit, and an operation controller unit. The signal output apparatus includes a manipulation input unit and a transmitter unit. The manipulation input unit receives a transmission instruction manipulation for transmitting an activation signal. The transmitter unit transmits the activation signal using the specific wireless transmission medium in response to that the transmission instruction manipulation is received by the manipulation input unit.

According to the information provision apparatus and the information provision system which include the above respective configurations, transmitting the activation signal from the signal output apparatus leads to the state enabling the wireless communicator unit in the information provision apparatus to perform the wireless transmission and reception of data. In a usual case that does not need the data communication between the information provision apparatus and the communication apparatus, the information provision apparatus is enabled to be maintained in the state disabling the wireless transmission and reception of data by the wireless communicator unit. The decline in the security performance of the information provision apparatus is thus enabled to be suppressed while the wireless remote work to the information provision apparatus is enabled to be efficiently by the communication apparatus located to be external.

### BRIEF DESCRIPTION OF DRAWINGS

FIG. 1 is an explanatory diagram illustrating an outline of an information provision system according to a first embodiment and illustrating an example of use specifically in a usual case;
FIG. 2 is an explanatory diagram illustrating an outline of an information provision system according to the first embodiment and illustrating an example of use specifically at an adjustment work;
FIG. 3 is a block diagram of the information provision apparatus according to the first embodiment;
FIG. 4 is an explanatory diagram illustrating an example of a sound source code and a sound source signal;
FIG. 5 is a block diagram of a portable terminal according to the first embodiment;
FIG. 6 is a block diagram of a communication activation apparatus according to the first embodiment;
FIG. 7 is a block diagram of an adjustment communication apparatus according to the first embodiment;
FIG. 8 is a flowchart illustrating an operation control process;
FIG. 9 is a flowchart illustrating a wireless control process; and
FIG. 10 is a block diagram of an information provision apparatus and a communication activation apparatus according to a second embodiment.

### EMBODIMENTS FOR CARRYING OUT INVENTION

Embodiments of the present disclosure as examples will be explained with reference to drawings.

### [First embodiment]

### (1) Configuration of information provision system

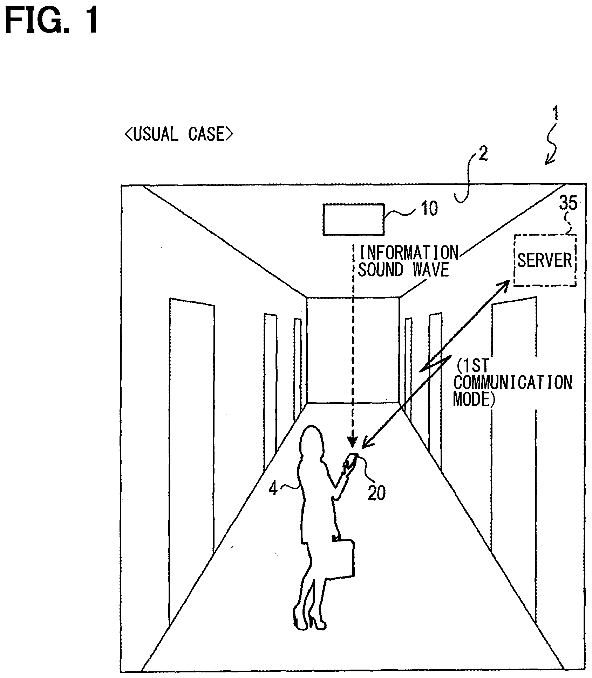

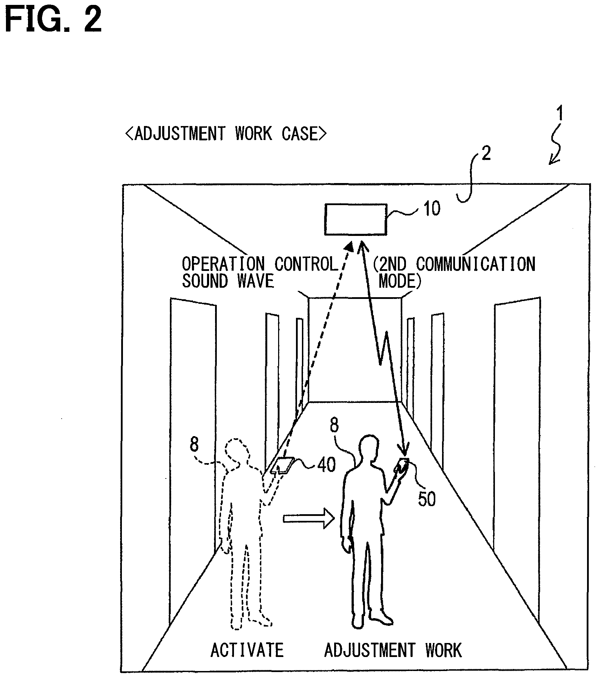

With reference to FIGs. 1 and 2, an information provision system 1 of the present embodiment includes an information provision apparatus 10, a portable terminal 20, a communication activation apparatus 40, and an adjustment communication apparatus 50. FIG. 1 and FIG. 2 illustrate an example which provides the information provision apparatus 10 in a ceiling 2 of an indoor passage. In detail, FIG. 1 illustrates the state where a user 4 with a portable terminal 20 is standing near under the information provision apparatus 10 in the indoor passage. Further, FIG. 2 illustrates the state where an adjustment worker 8 near under the information provision apparatus 10 in the indoor passage is performing an adjustment work using the adjustment communication apparatus 50 after performing an activation process using the communication activation apparatus 40.

The information provision apparatus 10 provides various kinds of information using sound waves. That is, the information provision apparatus 10 transmits information sound waves which are sound waves modulated with the information (hereinafter, provision information) on a provision target. The information sound wave of the present embodiment is a sound wave with a predetermined frequency band such as a frequency band of 20 kHz, for example. As illustrated in FIG. 1 and FIG. 2, the information provision apparatus 10 is arranged so as to transmit the information sound waves downward from the ceiling 2. Note that the frequency band of 20 kHz of the information sound wave is just an example; the frequency band of the information sound wave may be another frequency band. The frequency band of the information sound wave may be a frequency band of non-audible sounds other than 20 kHz band, example. In addition, the frequency band of the information sound wave does not necessarily need to be the frequency band of non-audible sounds, and may be a frequency band of audible sounds.

The portable terminal 20 is enabled to receive the information sound wave transmitted from the information provision apparatus 10. The portable terminal 20 receives the information sound wave transmitted from the information provision apparatus 10, and outputs the information based on the provision information contained in the received information sound wave. The final output of the information by the portable terminal 20 is performed with at least either the output with images or the output with speeches. The user 4 of the portable terminal 20 brings the portable terminal 20 within a range enabled to receive the information sound wave transmitted from the information provision apparatus 10; thereby, the user 4 can acquire, from the portable terminal 20, the information with at least either the images or speeches based on the provision information received from the information provision apparatus 10. The information finally outputted from the portable terminal 20 based on the provision information received from the information provision apparatus 10 is referred to as terminal output information.

In the present embodiment, the provision information itself transmitted using the information sound wave from the information provision apparatus 10 is not the information which is finally outputted from the portable; instead, the provision information itself is the information corresponding to the information which is finally outputted from the portable terminal 20 and the information for acquiring the information which is finally outputted from the portable terminal 20.

When receiving the provision information with the information sound wave from the information provision apparatus 10, the portable terminal 20 connects with a server 35 via a wireless communication and acquires from the server 35 the information corresponding to the provision information received from the information provision apparatus 10. The acquired information is outputted as the terminal output information. The communication mode (hereinafter, a first communication mode) of the data communication via the wireless communication between the portable terminal 20 and the server 35 is a communication mode used in a communication network for cellular phones, such as LTE, for example.

Note that the above specific method in which the portable terminal 20 acquires the information from the server 35 based on the provision information received from the information provision apparatus 10 and then outputs the acquired information is a just example of the method in which the portable terminal 20 outputs the terminal output information based on the provision information received from the information provision apparatus 10. The information provision apparatus 10 may transmit directly, as the provision information, the information which is outputted from the portable terminal 20 using the information sound wave. In addition, the portable terminal 20 may output, as the terminal output information, the provision information received from the information provision apparatus 10.

In the present embodiment, the portable terminal 20 outputs, as the terminal output information, the position related information relevant to the position at which the information provision apparatus 10 is installed. The position related information may be supposed to have various contents. It may be directly expressed as a location where the information provision apparatus 10 is located, such as a latitude and a longitude, or an address. It may be the information around a location where the information provision apparatus 10 is located. In the present embodiment, the portable terminal 20 acquires the position related information from the server 35 based on the provision information received from the information provision apparatus 10. Note that the information provision apparatus 10 may transmit this position related information directly using the information sound wave. In addition, the portable terminal 20 may receive the position related information transmitted from the information provision apparatus 10, and output directly the received position related information, without the server 35 intervening.

Note that the position related information as the terminal output information finally provided by the portable terminal 20 to the user is just an example. The terminal apparatus 20 may provide a user with, as the terminal output information, the information different from the position related information.

The information provision apparatus 10 is enabled to undergo various kinds of adjustment works via the wireless data communication from an outside source. With reference to FIG. 2, the adjustment communication apparatus 50 held by the adjustment worker 8 is one of devices enabling remotely the adjustment work of the information provision apparatus 10 via the wireless communication. In order to enable this adjustment work, the information provision apparatus 10 includes a wireless communication function other than the information transmission function using sound waves; the wireless communication function is configured to perform the wireless data communication with the adjustment communication apparatus 50.

The communication mode (hereinafter, second communication mode) of the wireless data communication between the adjustment communication apparatus 50 and the information provision apparatus 10 is, for instance, Bluetooth in the present embodiment. Note that Bluetooth is a registered trademark. The adjustment communication apparatus 50 is enabled to provide the information provision apparatus 10 with the various kinds of adjustment works, such as updates of the provision information, acquisitions of the various setting information or operation states of the information provision apparatus 10, changes in the various setting information, or instructions of the various operations.

In order to anticipate an adjustment work which may be required at an arbitrary point of time, the wireless communication function of the information provision apparatus 10 is enabled to operate constantly to permit the information provision apparatus 10 to be maintained under the state in which the wireless communication is always possible. However, if the wireless communication function of the information provision apparatus 10 is always operated, an unlawful access to the information provision apparatus 10 may be performed by a malicious third person.

The information provision apparatus 10 according to the present embodiment is thus configured to deactivate the wireless communication function in a usual case where an adjustment work is not operated. Therefore, under the usual case, the information provision apparatus 10 naturally deactivates transmission of any electric waves using the second communication mode, and, also, deactivates reception of any electric waves using the second communication mode from an outside source.

In contrast, when an adjustment work is necessary, the wireless communication function of the information provision apparatus 10 is enabled to be activated remotely via the wireless communication from an outside source. In detail, the communication activation apparatus 40 transmits an activation signal to the information provision apparatus 10; thereby, the wireless communication function of the information provision apparatus 10 is activated and transitions into an operation state. The transmission of the activation signal enables the wireless communication function of the information provision apparatus 10 to be activated; thereby, an adjustment work to the information provision apparatus 10 can be performed from the adjustment communication apparatus 50.

In addition, after the adjustment work is completed, a deactivation signal is transmitted from the communication activation apparatus 40 to the information provision apparatus 10; the wireless communication function of the information provision apparatus 10 can be deactivated again. In addition, the information provision apparatus is configured to deactivate automatically the wireless communication function after a specified period of time elapses since the activation, even if any deactivation signal is not transmitted from the communication activation apparatus 40 after the wireless communication function of the information provision apparatus 10 is activated by the transmission of the activation signal.

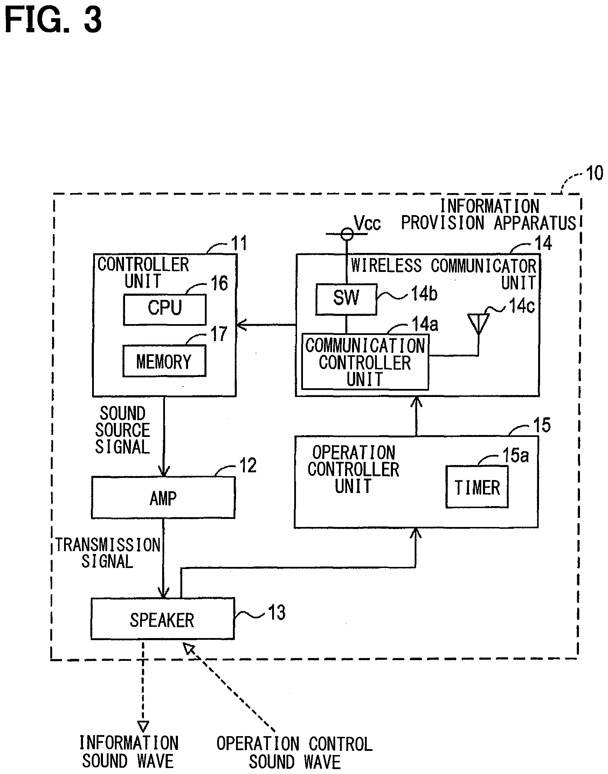

The wireless transmission medium for transmitting the activation signal and the deactivation signal from the communication activation apparatus 40 to the information provision apparatus 10 is a sound wave in the present embodiment. The information provision apparatus 10 is configured, as mentioned later using FIG. 3, such that a single speaker 13 is enabled to perform both (i) the transmission of the information sound wave containing the provision information and (ii) the reception of the sound wave including the activation signal and the sound wave including the deactivation signal which are transmitted from the communication activation apparatus 40. Note that each above-mentioned sound wave transmitted from the communication activation apparatus 40 may be also referred to as an operation control sound wave.

### (2) Configuration of information provision apparatus

With reference to FIG. 3, the information provision apparatus 10 includes a controller unit 11, an amplifier 12, a speaker 13, a wireless communicator unit 14, and an operation controller unit 15. The information provision apparatus 10 further includes an unshown power supply circuit, which provides an electric power with a control voltage Vcc of the direct current to thereby control each part such as the controller unit 11, the amplifier 12, the wireless communicator unit 14, or the operation controller unit 15.

The controller unit 11 includes a microcomputer which has a CPU 16 and memory 17. The memory 17 includes semiconductor memory such as a RAM, a ROM, and a flash memory. The memory 17 stores various programs and data. The data stored in the memory 17 include the data of the various setup information and the data of the provision information, which are to be transmitted using sound waves.

The CPU 16 achieves various kinds of functions by executing the various programs stored in a non-transitory tangible storage medium. In the present embodiment, the memory 17 storing the programs corresponds to the non-transitory tangible storage medium. Note that the controller unit 11 may include a single microcomputer, or may include a plurality of microcomputers. In addition, the various functions in the controller unit 11 may be achieved by so-called software processing based on the program; part or all of the various functions may be achieved by hardware circuits which include logic circuits and analog circuits.

The controller unit 11 includes at least a signal generation function which generates a sound source signal containing the provision information, and a wireless communication function which performs data communication with an external communication apparatus via the wireless communicator unit 14. The above external communication apparatus includes the adjustment communication apparatus 50 at least in the present embodiment.

The wireless communication function includes an adjustment responding function based on the data communication with the adjustment communication apparatus 50. The adjustment responding function is a function that executes the various processing according to the instructions from the adjustment communication apparatus 50 by performing the data communication with the adjustment communication apparatus 50. In detail, the adjustment responding function includes the processing of changing the provision information or the setup information which are stored in the memory 17, or the processing of transmitting the setup information stored in the memory 17 to the adjustment communication apparatus 50, based on the various control instructions from the adjustment communication apparatus 50.

The signal generation function by the controller unit 11 is achieved specifically as follows. That is, the controller unit 11 prepares a sound source code having a predetermined data format based on the data of the provision information stored in the memory 17.

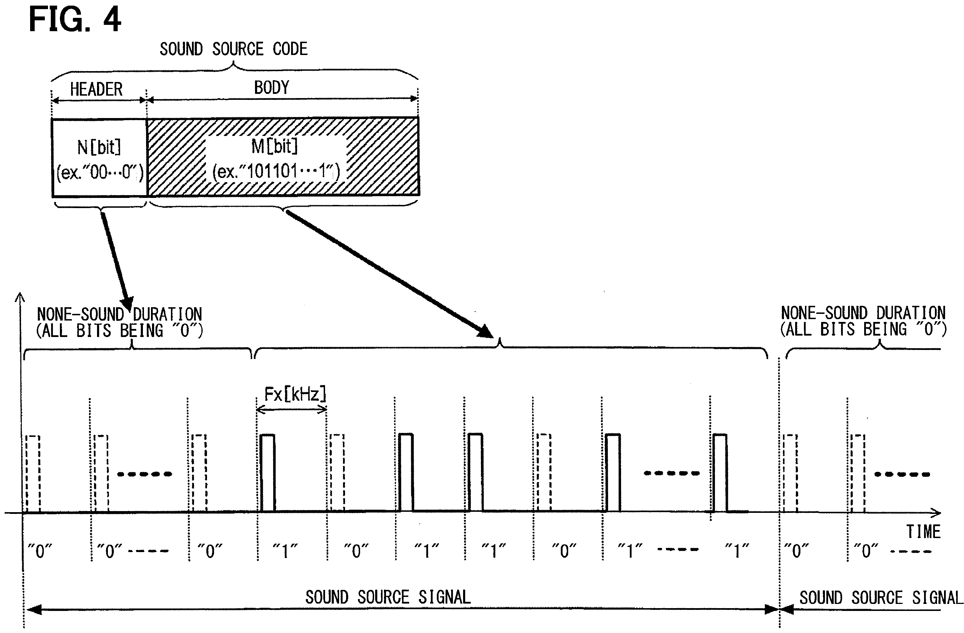

The sound source code contains mainly a header element and a body element, as illustrated in an upper part of FIG. 4. Among them, the header element is a data region of N bits which indicates a start of the sound source code. The body element is a data region of M bits. Note that N is a natural number equal to or greater than 1 (one) while M is a natural number equal to or greater than 1 (one). The data indicating the provision information is contained in the body element. In the present embodiment, each of all the N bits of the header element is "0" (zero).

The controller unit 11 generates successively sound source signals within a predetermined output duration based on the sound source code containing the data of the provision information, and outputs the sound source signals. The sound source signal contains pulses with a predetermined frequency Fx, as exemplified in the lower part of FIG. 4. The frequency Fx of the sound source signal in the present embodiment is a frequency of the above-mentioned information sound wave, i.e., 20 kHz.

The controller unit 11 generates the sound source signal depending on the values of the respective bits of the sound source code. In detail, a pulse is outputted to the bit value of "1" (one), whereas any pulse is not outputted to the bit value "0" (zero). All the N bits in the header element are "0" (zero); among an entity of one sound source signal corresponding to one sound source code, a region corresponding to the header element has no pulses; thus, the signal voltages in the region are maintained entirely as being "0" (zero).

It is noted that in the present embodiment, when generating a sound source signal, the controller unit 11 first generates, as carrier waves, pulses of ultrasonic waves with a predetermined frequency. The frequency of the pulses of the ultrasonic waves is, for example, 40 kHz. The sound source signal is generated by modulating the ultrasonic pulses. In detail, 20-kHz pulse waves are generated in appearance by omitting the pulses alternately in the ultrasonic pulses; simultaneously, the 20-kHz pulse waves are modulated to follow the respective bit values of the sound source code.

Note that such generation of a sound source signal based on the pulses of ultrasonic waves is just an example. The generation of a sound source signal may be made without using the ultrasonic waves. That is, as long as the information sound wave containing the provision information can be eventually transmitted from the speaker 13, how to generate a sound source signal or what kind of waveforms or frequencies of a sound source signal may be determined as needed.

The output duration in which a sound source signal is generated may be determined as needed. For instance, the output duration may be an entire duration in which the controller unit 11 is operating. A constant output duration may be generated periodically. Whenever a predetermined output condition is satisfied, a constant output duration may be designated and a sound source signal may be outputted during the constant output duration.

The present embodiment provides an example generating and outputting the sound source signals successively, as illustrated in a lower part in FIG. 4. The sound source signal generated by the controller unit 11 is amplified with the amplifier 12 and inputted into the speaker 13; thereby the sound source signal is electrical signal-to-sound converted into a sound wave and transmitted as an information sound wave. As a result, in a period of time during which the pulses of the sound source signal are inputted into the speaker 13, the pulses are subjected to an electrical signal-to-sound conversion and sound waves are transmitted. In contrast, in a period of time during which any pulses of the sound source signal are not inputted, the speaker 13 does not transmit any sound wave and the sound pressure of the sound waves outputted by the speaker 13 thus becomes 0 (zero).

Therefore, the period of time during which the header element of the sound source code among the entire sound source signal is modulated comes to be a none-sound duration during which any pulses do not arise and the output sound pressure from the speaker 13 comes to be 0 (zero). That is, within the output duration during which the information sound waves are transmitted due to the sound source signal generated by the controller unit 11, the none-sound durations each corresponding to the header element of the sound source code arise periodically.

The amplifier 12 receives the sound source signal generated by the controller unit 11, amplifies the sound source signal, and outputs the amplified sound source signal to the speaker 13. The speaker 13 is enabled to generate sound waves. The speaker 13 according to the present embodiment is, for instance, a piezoelectric speaker provided with a piezo-ceramic element as an oscillator. The speaker 13 generates an information sound wave by converting a transmission signal serving as the sound source signal amplified with the amplifier 12 into mechanical vibrations of the piezo-ceramic element. In addition, the speaker 13 has a sound-to-electrical signal function; this function is to receive a sound wave from an outside source, to convert the sound wave into an electrical signal, and to output the electrical signal. Therefore, in response to that the speaker 13 receives a sound wave from the outside source, the sound wave is converted into an electrical signal.

That is, in the present embodiment, a single speaker 13 has both a function as a converter unit which converts a transmission signal into an information sound wave and transmits it, and a function as a receiver unit which receives a sound wave and converts the sound wave into an electrical signal. The speaker 13 is enabled to receive an operation control sound wave transmitted from the communication activation apparatus 40. Upon receiving a sound wave, the speaker 13 converts the sound wave into an electrical signal; then, a reception signal being the electrical signal after the conversion is inputted to the operation controller unit 15.

The wireless communicator unit 14 is a communication module for transmitting and receiving data with an external communication apparatus using a second communication mode. The wireless communicator unit 14 is enabled to perform transmission and reception of electric waves using the second communication mode. Note that the second communication mode is Bluetooth in the present embodiment, for instance.

The wireless communicator unit 14 includes a communication controller unit 14a, a power switch 14b, and an antenna 14c. The communication controller unit 14a operates by receiving a control voltage Vcc from the power supply circuit through the power switch 14b. Note that the power switch 14b is turned on in a usual case. Therefore, while the control voltage Vcc is outputted from the power supply circuit, the communication controller unit 14a basically receives always the control voltage Vcc.

The antenna 14c is configured to perform transmission and reception of electric waves in the second communication mode. In response to that an electric wave using the second communication mode is received by the antenna 14c, the communication controller unit 14a demodulates the reception signal and outputs the demodulated reception data to the controller unit 11. In addition, in response to that a transmission data is inputted from the controller unit 11, the communication controller unit 14a modulates the transmission data and transmits it through the antenna 14c.

In addition, the wireless communicator unit 14 has a function which causes the wireless communicator unit 14 to transition into a sleep state under a predetermined condition. The sleep state of the wireless communicator unit 14 corresponds to a function which stops part or all of the functions of the wireless communicator unit 14 itself. A function stopped during the sleep state includes an electric wave transmission and reception function in which the communication controller unit 14a performs transmission and reception of electric waves with an external communication apparatus using the second communication mode. When the wireless communicator unit 14 transitions into the sleep state, at least the electric wave transmission and reception function is stopped to disable the performance of the data communication with an external communication apparatus by the controller unit 11.

Such a sleep condition satisfying the sleep state of the wireless communicator unit 14 includes a fact that a state where the controller unit 11 does not perform any data communication with an external communication apparatus continues for a specified period of time or greater. In this case, the external communication apparatus may be limited to specific communication apparatuses including the adjustment communication apparatus 50. When the state where the data communication with the limited communication apparatuses is not performed continues for a specified period of time or greater, the wireless communicator unit 14 may be configured to transition into the sleep state.

Furthermore, the sleep condition includes a fact that a deactivation command is inputted from the operation controller unit 15. The wireless communicator unit 14 may receive an activation command or a deactivation command from the operation controller unit 15, to be mentioned later. When receiving a deactivation command from the operation controller unit 15 during a usual operation state, the wireless communicator unit 14 transitions into the sleep state, thereby stopping the electric wave transmission and reception function. In contrast, when receiving an activation command from the operation controller unit 15 during the sleep state, the wireless communicator unit 14 cancels the sleep state and returns to the usual operation state. This enables the wireless communicator unit 14 to perform the data transmission and reception.

That is, during a period of time for which the control voltage Vcc is supplied, the wireless communicator unit 14 does not always maintain the state enabling the data communications with an external communication apparatus, but stops at least the electric wave transmission and reception if the sleep condition is satisfied. Then, the sleep condition is cancelled to return the wireless communicator unit 14 into the usual operation state if a condition for cancelling the sleep state is satisfied, i.e., if an activation command is inputted from the operation controller unit 15, or if a predetermined activation command is inputted from the controller unit 11.

Note that the above various functions included in the wireless communicator unit 14 are basically performed by the communication controller unit 14a. In addition, the various functions in the communication controller unit 14a may be achieved by so-called software processing based on programs; part or all of the various functions may be achieved by hardware circuits which include logic circuits and analog circuits.

The operation controller unit 15 performs operation control processes which control an operation state of the wireless communicator unit 14, during the none-sound duration in which the output sound pressure from the speaker 13 is maintained to be 0 (zero), based on the sound wave received by the speaker 13. The operation control processes include at least an activation process and a deactivation process. The activation process is a process which outputs an activation command to the wireless communicator unit 14 in response to that an activation signal from the communication activation apparatus 40 is contained in a reception signal after the sound-to-electrical signal conversion of the sound wave received by the speaker 13 during the none-sound duration. In contrast, the deactivation process is a process which outputs a deactivation command to the wireless communicator unit 14 in response to that a deactivation signal from the communication activation apparatus 40 is contained in a reception signal from the speaker 13 during the none-sound duration.

As mentioned above, while the information sound waves are transmitted from the speaker 13, the none-sound duration being a period of time corresponding to the header element of the sound source code takes place periodically. The operation controller unit 15 utilizes a fact that none-sound duration corresponding to the header element takes place periodically, and is enabled to perform the various controls based on the sound waves received by the speaker 13 during the none-sound duration.

The operation controller unit 15 includes a timer 15a. The timer 15a may be achieved by a software process or a hardware circuit. The operation controller unit 15 starts measuring of a clock with the timer 15a in response to that an activation command is outputted in the activation process. The operation controller unit 15 then outputs to the wireless communicator unit 14 a deactivation command that causes the wireless communicator unit 14 to transition into the sleep state, in response to that a specified period of time elapses without receiving a deactivation signal.

In addition, the various functions included in the operation controller unit 15 including the above function of measuring a clock with the timer 15a may be achieved by so-called software processing based on programs; part or all of the various functions may be achieved by hardware circuits which include logic circuits and analog circuits.

### (3) Configuration of portable terminal

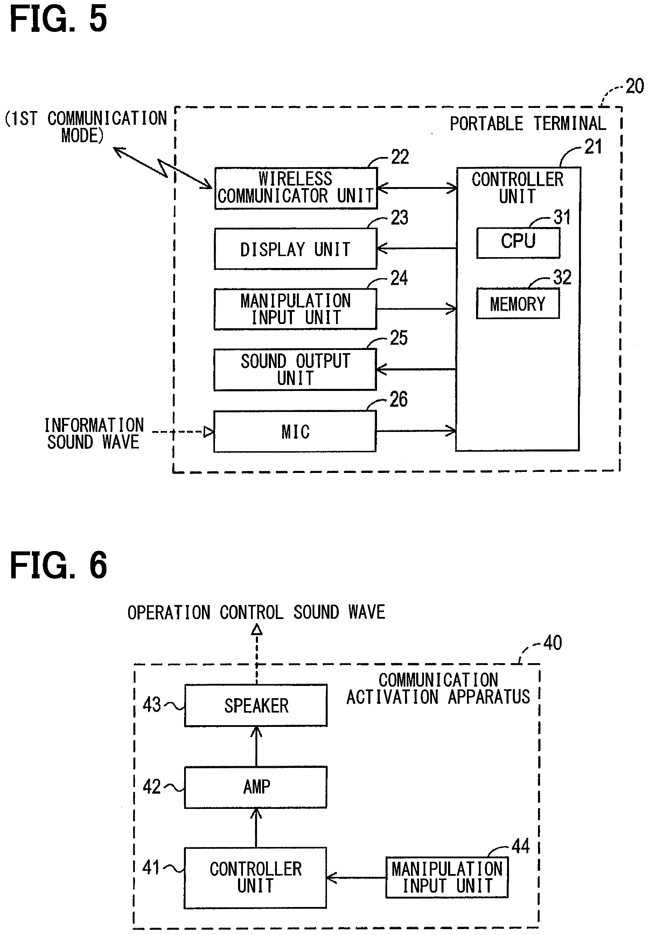

With reference to FIG. 5, the portable terminal 20 includes a controller unit 21, a wireless communicator unit 22, a display unit 23, a manipulation input unit 24, a sound output unit 25, and a microphone 26.

The controller unit 21 includes a microcomputer which has a CPU 31 and a memory 32. The memory 32 includes semiconductor memory such as a RAM, a ROM, and a flash memory. The memory 32 stores various programs and data.

The CPU 31 achieves various kinds of functions by executing the various programs stored in the memory 32. Note that the controller unit 21 may include a single microcomputer, or may include a plurality of microcomputers. In addition, the various functions in the controller unit 21 may be achieved by so-called software processing based on the program; part or all of the various functions may be achieved by hardware circuits which include logic circuits and analog circuits.

The controller unit 21 achieves a telephone function and an information output function. The telephone function is a function which enables a speech call via a communication network of cellular phones by connecting with the communication network via the wireless communicator unit 22.

The information output function is a function which outputs the provision information included in an information sound wave transmitted from the information provision apparatus 10 via at least either the display unit 23 or the sound output unit 25 in response to that such an information sound wave is received by the microphone 26.

The wireless communicator unit 22 is a communication module for performing wireless communication using a first communication mode. The above-mentioned telephone function is achieved using this wireless communicator unit 22. The display unit 23 includes a display screen installed in a front surface of the housing of the portable terminal 20. The display screen is a liquid crystal display, for example. The display unit 23 displays images on the display screen according to image data, which indicate images to be displayed, inputted from the controller unit 21.

The manipulation input unit 24 includes a touch panel installed on the display screen of the display unit 23, and switches installed around the display screen of the display unit 23. For example, with reference to the user 4 in FIG. 1, such a user of the portable terminal 20 performs an input manipulation to the manipulation input unit 24 to thereby execute the various functions of the portable terminal 20. In response to that such an input manipulation via the touch panel or switches is performed by the user, the manipulation input unit 24 outputs the manipulation information which indicates the contents of the input manipulation to the controller unit 21. Upon receiving the manipulation information from the manipulation input unit 24, the controller unit 21 performs various processes based on the received manipulation information.

The sound output unit 25 outputs the various speeches. The sound output unit 25 outputs speeches according to the speech data, which is inputted from the controller unit 21 and indicates the speeches to be outputted. The microphone 26 receives the sound wave taking place in proximity, converts the sound wave into an electrical signal, and inputs the signal into the controller unit 11. The microphone 26 is provided mainly for two purposes. A first purpose is to receive a speech which the user utters at the time of a voice call. A second purpose is to receive an information sound wave transmitted from the information provision apparatus 10.

Upon receiving the information sound wave from the information provision apparatus 10, the microphone 26 inputs the reception signal to the controller unit 21, to thereby enable the controller unit 21 to acquire the provision information contained in the reception signal. Upon acquiring the provision information transmitted via the information sound wave from the information provision apparatus 10, the controller unit 21 outputs the provision information with the above-mentioned information output function. This information output function allows the user of the portable terminal 20 to acquire the provision information provided from the information provision apparatus 10.

### (4) Configuration of communication activation apparatus

With reference to FIG. 6, the communication activation apparatus 40 includes a controller unit 41, an amplifier 42, a speaker 43, and a manipulation input unit 44.

The controller unit 41 is enabled to output an activation signal or a deactivation signal depending on a transmission instruction manipulation to the manipulation input unit 44 by a user. Each of the activation signal and the deactivation signals is converted into the sound wave and then transmitted. The activation signal and the deactivation signal are signals with respective predetermined frequency bands; the signals are respectively converted into the sound waves with the predetermined frequency bands and then transmitted. How to generate what kind of waveform or frequency of the activation signal or the deactivation signal can be determined as needed.

As mentioned above, the activation signal is a signal, which controls the wireless communicator unit 14 of the information provision apparatus 10 so as to operate usually so that the information provision apparatus 10 transitions into the state enabling the data communication with an external communication apparatus using the second communication mode. In contrast, the deactivation signal is a signal, which controls the wireless communicator unit 14 of the information provision apparatus 10 so as to transition into the sleep state in which the information provision apparatus 10 fails to perform the data communication with an external communication apparatus using the second communication mode.

The speaker 43 performs an electrical signal-to-sound conversion of an input signal into sound waves and transmits the sound waves. In response to that the controller unit 41 generates an activation signal or a deactivation signal, the generated signal is amplified with the amplifier 42 and is transmitted in the sound wave from the speaker 43. As long as an input signal is enabled to be subjected to an electrical signal-to-sound conversion and the resultant sound wave is enabled to be transmitted, any type of the speaker 43 may be employed.

The manipulation input unit 44 receives a transmission instruction manipulation by a user of the communication activation apparatus 40, such as an adjustment worker 8. The user can perform a transmission instruction manipulation to the manipulation input unit 44, the transmission instruction manipulation being one of (i) an activation transmission manipulation for transmitting an activation signal and (ii) a deactivation transmission manipulation for transmitting a deactivation signal, whichever is selected.

When the activation transmission manipulation is performed to the manipulation input unit 44, the controller unit 41 transmits an activation signal via the sound wave from the speaker 43 by generating the activation signal and outputting the activation signal to the amplifier 42. When the deactivation transmission manipulation is performed to the manipulation input unit 44, the controller unit 41 transmits a deactivation signal via the sound wave from the speaker 43 by generating the deactivation signal and outputting the deactivation signal to the amplifier 42.

The frequencies of the activation signal and the deactivation signal may be each identical to or different from the frequency of the information sound wave transmitted from the information provision apparatus 10.

### (5) Configuration of adjustment communication apparatus

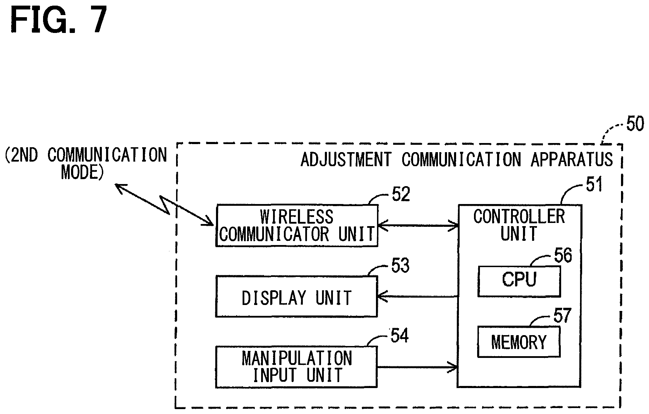

With reference to FIG. 7, the adjustment communication apparatus 50 includes a controller unit 51, a wireless communicator unit 52, a display unit 53, and a manipulation input unit 54.

The controller unit 51 includes a microcomputer which has a CPU 56 and memory 57. The memory 57 includes semiconductor memory such as a RAM, a ROM, and a flash memory. The memory 57 stores various programs and data.

The CPU 56 achieves various kinds of functions by executing the various programs stored in the memory 57. Note that the controller unit 51 may include a single microcomputer, or may include a plurality of microcomputers. In addition, the various functions in the controller unit 51 may be achieved by so-called software processing based on the program; part or all of the various functions may be achieved by hardware circuits which include logic circuits and analog circuits.

The controller unit 51 achieves a remote adjustment function. The remote adjustment function is a function which performs wirelessly the various kinds of adjustment works remotely to the information provision apparatus 10. Examples of such a remote adjustment work include the update of the provision information, the acquisition of the operation state or the setup information of the information provision apparatus 10, the change of the various setup information, and the various kinds of operation instructions.

The wireless communicator unit 52 is a communication module for performing wireless communication using the second communication mode. The above-mentioned remote adjustment function is achieved using this wireless communicator unit 52. The display unit 53 includes a display screen installed in a front surface of the housing of the adjustment communication apparatus 50. This display screen is a liquid crystal display, for example. The display unit 53 displays images on the display screen according to image data, which indicate images to be displayed, inputted from the controller unit 51.

The manipulation input unit 54 receives various kinds of input manipulations by the user of the adjustment communication apparatus 50. The manipulation input unit 54 may include a touch panel installed on the display screen of the display unit 53, or may include switches installed around the display screen of the display unit 53.

For example, the user of the adjustment communication apparatus 50, such as the adjustment worker 8 in FIG. 2, can perform remotely an adjustment work of the information provision apparatus 10 by performing the various kinds of input manipulations to the manipulation input unit 54. In response to that an input manipulation is performed, the manipulation input unit 54 outputs the manipulation information which indicates the contents of the input manipulation to the controller unit 51. Upon receiving the manipulation information from the manipulation input unit 54, the controller unit 51 performs various processes based on the received manipulation information.

### (6) Operation control process

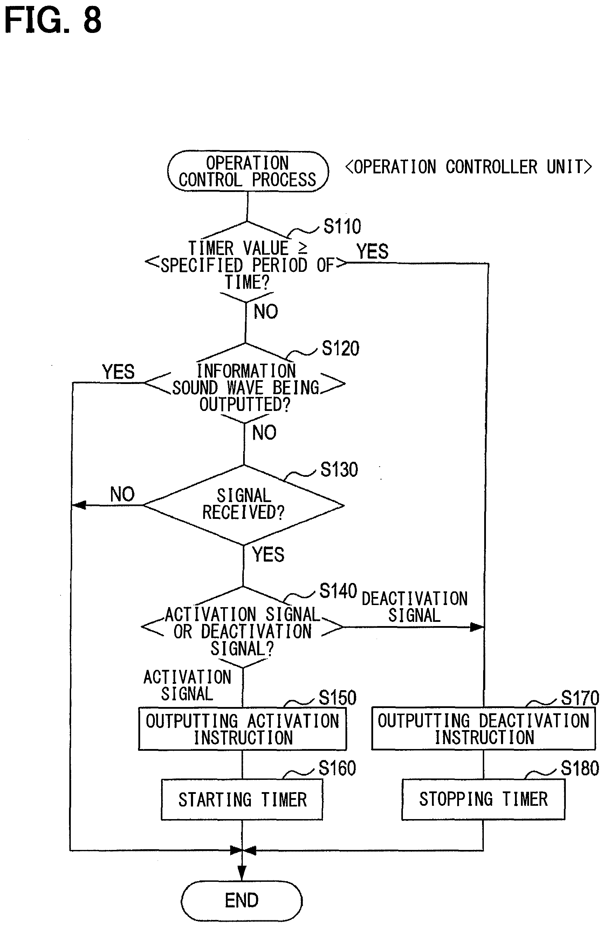

The following explains an operation control process performed by the operation controller unit 15 of the information provision apparatus 10 in detail using FIG. 8. In response to that an operation is started by being supplied with the control voltage Vcc from the power supply circuit, the operation controller unit 15 executes repeatedly the operation control process in FIG. 8, periodically.

With the start of the operation control process, at S110, the operation controller unit 15 determines whether a timer value (i.e., a clock counting value of the timer 15a) is a specified period of time or greater. When the timer value is less than the specified period of time, the sequence proceeds to S120, where it is determined whether an information sound wave is being outputted from the speaker 13. In other words, this determination is as to whether a none-sound duration takes place.

When the information sound wave is being outputted from the speaker 13 (i.e., when the none-sound duration does not take place), the operation control process is ended. When the information sound wave is not being outputted from the speaker 13 (i.e., when the none-sound duration takes place), the sequence proceeds to S130, where it is determined whether a signal via sound waves is inputted from the speaker 13 (i.e., whether a reception signal is inputted from the speaker 13).

When the sound wave is not received from the speaker 13 and any reception signal is not inputted, the operation control process is ended. When the reception signal is determined to be inputted by receiving the sound wave from the speaker 13, the sequence proceeds to S140, where it is determined whether the reception signal is an activation signal or a deactivation signal.

When the reception signal is an activation signal, the sequence proceeds to S150 where an activation command is outputted to the wireless communicator unit 14. At S160, measuring the clock with the timer 15a is started. When the reception signal is a deactivation signal, the sequence proceeds to S170, where a deactivation command is outputted to the wireless communicator unit 14. At S180, measuring the clock with the timer 15a is stopped and the timer value of the timer 15a is cleared to 0 (zero). When the timer value is a specified period of time or greater at S110, the sequence proceeds to S170 and then S180.

Note that after starting measuring the clock with the timer 15a at S160, the timer value of the timer 15a may be cleared each time the data transmission from the controller unit 11 to an external communication apparatus or the data reception from the external communication apparatus to the controller unit 11 is performed (i.e., each time a signal communicated between both is relayed by the wireless communicator unit 14).

### (7) Wireless control process

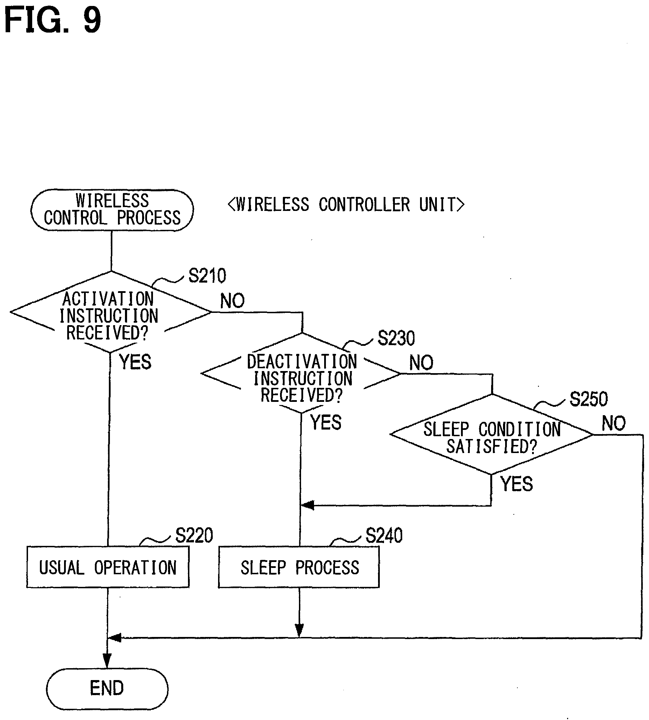

The following explains a wireless control process performed by the communication controller unit 14a of the wireless communicator unit 14 in the information provision apparatus 10 in detail using FIG. 9. In response to that an operation is started by being supplied with the control voltage Vcc from the power supply circuit, the communication controller unit 14a executes repeatedly the wireless control process in FIG. 9, periodically. Note that the communication controller unit 14a performs also this wireless control process even during a sleep state.

With the start of the wireless control process, at S210, the communication controller unit 14a determines whether an activation command is inputted from the operation controller unit 15. When the activation command is inputted, the sequence proceeds to S220 where the sleep state is canceled to permit the communication controller unit 14a to perform a usual operation. Note that when a usual operation is already performed, at S220, the state of performing the usual operation is maintained as it is. At S220, the communication controller unit 14a is allowed to perform a usual operation; thus, the controller unit 11 is enabled to perform the data communication using the second communication mode through the wireless communicator unit 14.

When any activation command is not inputted at S210, the sequence proceeds to S230 where it is determined whether a deactivation command is inputted from the operation controller unit 15. When the deactivation command is inputted, the sequence proceeds to S240 where a sleep process is performed. That is, the wireless communicator unit 14 is caused to transition into a sleep state. Note that when the sleep state is already taking place, at S240, the sleep state is maintained as it is. The sleep process is performed at S240; thereby the data communication using the second communication mode is disabled.

When a deactivation command is not inputted at S230, the sequence proceeds to S250 where it is determined whether a sleep condition is satisfied. Note that the determination at S250 is performed during the usual operation state instead of the sleep state. If the sleep state is already taking place, S250 is omitted.

When the sleep condition is not satisfied at S250, the wireless control process is ended. When the sleep condition is satisfied, the sleep process is performed at S240.

### (8) Effect of first embodiment

The first embodiment described above provides advantageous effects as follows.

Under the present first embodiment, a deactivation signal is transmitted from the communication activation apparatus 40 to the information provision apparatus 10; thereby the wireless communicator unit 14 in the information provision apparatus 10 is caused to transition into a sleep state to thereby permit the information provision apparatus 10 to enter into the state where the data communication using the second communication mode is disabled. This can suppress an unlawful access to the information provision apparatus 10 via the wireless communication using the second communication mode.

Suppose a case that the wireless communication using the second communication mode is needed between the information provision apparatus 10 and an external communication apparatus such as an adjustment work using the adjustment communication apparatus 50. In such a case, the transmission of an activation signal may be performed from the communication activation apparatus 40 to the information provision apparatus 10. The activation signal is transmitted from the communication activation apparatus 40 to the information provision apparatus 10; thereby the wireless communicator unit 14 in the information provision apparatus 10 is caused to transition into a usual operation state to thereby permit the information provision apparatus 10 to enter into the state where the data communication using the second communication mode is enabled.

That is, during a period of time for which the information provision apparatus 10 does not perform the data communication via the second communication mode, the wireless communication function of the information provision apparatus 10 can be stopped by the transmission of the deactivation signal. The wireless communication function of the information provision apparatus 10 can be activated again by transmitting an activation signal only when the data communication via the second communication mode is necessary. The decline in the security performance of the information provision apparatus is thus enabled to be suppressed while the wireless adjustment work to the information provision apparatus 10 is enabled to be efficiently by the adjustment communication apparatus 50.

In addition, assume a case that after the wireless communication function of the information provision apparatus 10 is operated by transmitting an activation signal from the communication activation apparatus 40, any deactivation signal is not transmitted to the information provision apparatus 10. Even in such a case, the wireless communicator unit 14 of the information provision apparatus 10 transitions into the sleep state under a specified condition. In detail, the wireless communicator unit 14 transitions into the sleep state in response to either (i) that a sleep condition is satisfied in the wireless communicator unit 14 after the operation of the wireless communication function due to the activation signal is started in the information provision apparatus 10, or (ii) that the timer value reaches a specified period of time in the operation controller unit 15. This can suppress the situation where the usual operation state of the wireless communicator unit 14 continues a long period of time although the wireless communication is unnecessary while suppressing more the decline in the security performance of the information provision apparatus 10.

Further, in the first embodiment, in order to shift the wireless communicator unit 14 from the sleep state into the usual operation state, it is necessary to transmit an activation signal from the communication activation apparatus 40. In the first embodiment, the activation signal is transmitted with the sound wave. This can achieve the transmission of the activation signal with a comparatively simple configuration.

In addition, in the information provision apparatus 10, each of (i) the transmission of the information sound wave containing the provision information and (ii) the reception of the activation signal and the deactivation signal from the communication activation apparatus 40 is performed using the same speaker 13. Thus, a single speaker 13 is used to perform both the transmission and the reception of sound waves without providing the respective speakers for the transmission and the reception of sound waves; this enables the reduction in the number of components of the information provision apparatus 10.

In addition, the reception process of an activation signal or a deactivation signal from the communication activation apparatus 40 in the operation controller unit 15 of the information provision apparatus 10 is performed during the none-sound duration in which the sound pressure outputted from the speaker 13 of the information provision apparatus 10 is maintained to be "0" (zero), but is not performed during a period of time in which the sound wave is actually outputted from the speaker 13. Thus, an information sound wave outputted from the speaker 13 can be suppressed from involving an incorrect determination that an activation signal or a deactivation signal is inputted.

The communication activation apparatus 40 is equivalent to a signal output apparatus. The adjustment communication apparatus 50 is equivalent to a communication apparatus. The controller unit 11 of the information provision apparatus 10 is equivalent to an information signal generator unit. The sound source signal generated by the controller unit 11 of the information provision apparatus 10 is equivalent to an information signal. The speaker 13 of the information provision apparatus 10 is equivalent to a converter unit and a receiver unit. The speaker 43 of the communication activation apparatus 40 is equivalent to a transmitter unit. The header element in the sound source code is equivalent to a specific data region. The bit value "1" in the sound source code is equivalent to a first logical value; the bit value "0" is equivalent to a second logical value.

### [Second embodiment]

A second embodiment is similar to the first embodiment, except for a part of the configuration of the information provision apparatus and a part of the configuration of the communication activation apparatus. The explanation is thus omitted about the configuration which is similar to that of the first embodiment; the following explanation focuses on different points. The same reference sign as that of the first embodiment indicates the same configuration; the explanation of the same reference sign in the first embodiment is appended to the second embodiment.

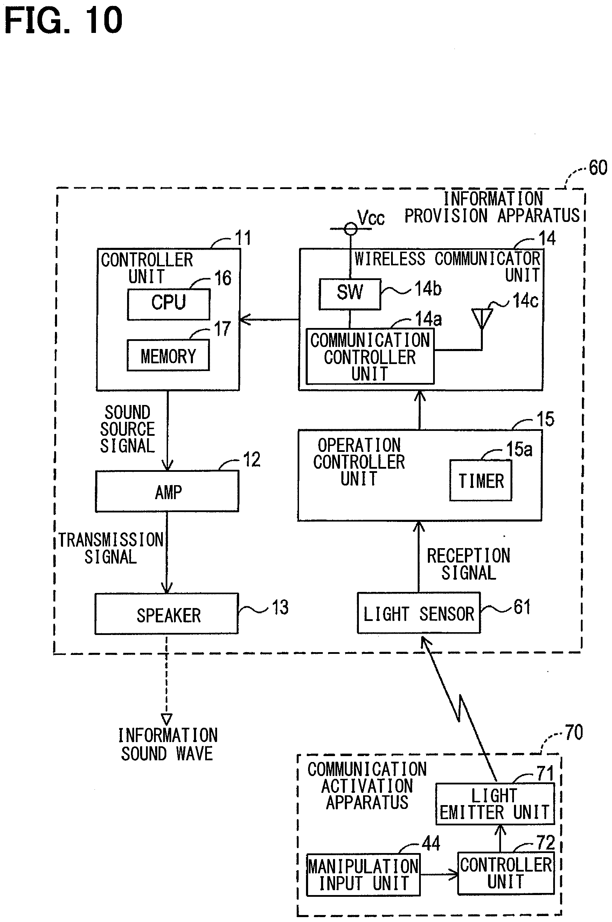

The information provision system according to the second embodiment is different from the information provision apparatus according to the first embodiment in respect of configurations of the information provision system and the communication activation apparatus. The communication activation apparatus 70 according to the second embodiment includes a light emitter unit 71, a controller unit 72, and a manipulation input unit 44, as illustrated in FIG. 10.

The controller unit 72 can output an activation signal or a deactivation signal depending on a transmission instruction manipulation to the manipulation input unit 44 by a user. The light emitter unit 71 converts an input signal inputted from the controller unit 72 into a light signal and transmits the light signal. That is, the second embodiment employs a light as a wireless transmission medium for performing the wireless transmission of an activation signal or a deactivation signal from the communication activation apparatus 70. The light transmitted by the light emitter unit 71 may be a laser light with a predetermined frequency, an infrared light, or a light with another frequency.

In response to that an activation transmission manipulation is performed to the manipulation input unit 44, the controller unit 72 generates an activation signal and outputs the activation signal to the light emitter unit 71, thereby transmitting the activation signal using the light signal from the light emitter unit 71. In response to that a deactivation transmission manipulation is performed to the manipulation input unit 44, the controller unit 72 generates a deactivation signal and outputs the deactivation signal to the light emitter unit 71, thereby transmitting the deactivation signal using the light signal from the light emitter unit 71.

As in FIG. 10, the information provision apparatus 60 according to the second embodiment includes an optical sensor 61 for receiving a light signal transmitted from the communication activation apparatus 70. In response to receiving the light signal from the communication activation apparatus 70, the optical sensor 61 convert the light signal into an electrical signal, and outputs a reception signal, which is the electrical signal after the conversion, to the operation controller unit 15.

When the received light signal indicates an activation signal, a reception signal which includes the activation signal is inputted to the operation controller unit 15. In contrast, when the received light signal indicates a deactivation signal, a reception signal which includes the deactivation signal is inputted to the operation controller unit 15.

As such, an activation signal and a deactivation signal, respectively, for activating and deactivating the wireless communication function of the information provision apparatus is transmitted not only by using a sound wave exemplified in the first embodiment, but also by using a light signal. The second embodiment, which is configured to transmit an activation signal or a deactivation signal using a light signal, can provide effects similar to those of the first embodiment, except for the effect accompanying the speaker 13 performing both the transmission and the reception of sound waves.

Note that another wireless transmission medium other than the sound wave and the light signal may be employed as a wireless transmission medium for performing the wireless transmission of an activation signal or a deactivation signal. For example, an electric wave may be also employed.

### [Other embodiments]

Although the embodiments are described above, the present disclosure is not limited to the embodiments and can be modified in various manners.
(1) In the wireless communicator unit 14 of the information provision apparatus 10 according to the first embodiment, the wireless communicator unit 14 is caused to transition into the sleep state in response to that a deactivation command is inputted from the operation controller unit 15. This is just an example. When receiving a deactivation command from the operation controller unit 15, another process at least including the stopping of the function of transmission and reception of electric waves may be employed. For example, a switch may be provided in a transmission line between the antenna 14c and the communication controller unit 14a so as to shut down the transmission line. For example, a switch may be provided in a data transmission line between the controller unit 11 and the wireless communicator unit 14 to shut down the data transmission line. For instance, another configuration may be provided in which upon receiving a deactivation command, the power switch 14b is turned off to shut down the supply of the control voltage Vcc itself; upon thereafter receiving an activation command, the power switch 14b is turned on. The same may also be applied to the information provision apparatus 60 according to the second embodiment.
(2) A single speaker 13 performing both the transmission and the reception of sound waves is not indispensable. A speaker for transmission and another speaker for reception may be provided separately. In addition, the converter unit for generating sound waves includes a speaker using the piezo-ceramic element is just an example. Another device may be employed, which is enabled to convert an electrical signal into a sound wave and output the sound wave. The same may be also applied to the receiver unit; the various kinds of devices may be employed, each of which converts a sound wave into an electrical signal.
(3) The sound source signal may be transmitted consecutively, as exemplified in FIG. 4; alternatively, one sound source signal or a plurality of consecutive sound source signals may be transmitted intermittently. In addition, in contrast to the example in FIG. 4, when the bit value is 1 (one), any pulse may be not outputted while when the bit value is 0 (zero), a pulse may be outputted. In such a case, all the bits of a header element may be designated as 1 (one). In addition, FIG. 4 illustrates, in a lower part, a pulses-formed sound source signal being generated by reflecting the respective bit values of a sound source code as an information signal containing the provision information. This is just an example. An information signal may not be limited to one having a format as in FIG. 4. A different information signal having a different format may be generated; the different information signal is enabled to eventually transmit a sound wave containing the provision information from the speaker 13.
(4) In an information provision apparatus, a wireless communicator unit 14 itself may include a function as an operation controller unit 15. That is, the function of the operation controller unit 15 may be given to the wireless communicator unit 14; the wireless communicator unit 14 may be provided to perform an activation process and a deactivation process based on an activation signal and a deactivation signal, respectively.
(5) In an information provision apparatus, it is not indispensable that the wireless communicator unit 14 has a sleep function. As long as an activation process or a deactivation process is enabled to be performed due to an activation signal or a deactivation signal, respectively, from the communication activation apparatus, a wireless communicator unit 14 may not need to have a sleep function.
(6) A signal output apparatus includes the communication activation apparatus 40 according to the first embodiment and the communication activation apparatus 70 according to the second embodiment. This is just an example. A different configuration may be employed; a different wireless transmission medium for transmitting an activation signal or a deactivation signal may be employed. In addition, an apparatus for transmitting an activation signal and another apparatus for transmitting a deactivation signal may be prepared separately. In addition, in cases that the wireless communicator unit of the information provision apparatus is provided with a sleep function like in the above embodiments, the function transmitting a deactivation signal may be omitted from the communication activation apparatus.
(7) The frequency of an information sound wave transmitted from the information provision apparatus can be determined as needed. In addition, the wireless communication medium employed by the information provision apparatus for transmission of the provision information may not necessarily be a sound wave. The same may be applied to the case where a communication activation apparatus is configured to transmit an activation signal or a deactivation signal using a sound wave.
(8) A communication apparatus communicating data with an information provision apparatus via the second communication mode with the second communication mode includes an adjustment communication apparatus 50, as described in the above embodiments. This is just an example. A different communication apparatus enabled to perform the various adjustment works to an information provision apparatus by communicating data with the information provision apparatus may also be employed. For example, a communication apparatus may include a portable personal computer. In addition, for example, a portable terminal in which the software for performing an adjustment work is installed may be included. In addition, the second communication mode is not limited to Bluetooth. A different wireless communication mode other than Bluetooth may be employed for data communication to perform an adjustment work.
(9) A single information provision apparatus may include a plurality of speakers, from which an information sound wave may be transmitted. In addition, all the constituent elements configuring an information provision apparatus do not need to be accommodated in a single housing. For example, the speaker 13 may be arranged to be separated from an information provision apparatus.
(10) A function of one constituent element in the above embodiments may be distributed to a plurality of constituent elements; a plurality of functions of a plurality of constituent elements in the above embodiments may be integrated into one constituent element. In addition, a part of the configuration in the above embodiments may be omitted. In addition, at least a part of the configuration of each embodiment mentioned above may be added to or replaced by the configuration of another embodiment mentioned above. All the examples contained in a technical idea identified only from the terms described in claims are the embodiments of the present disclosure.
(11) As described in the above, functions are included in the information provision system 1 and the apparatuses included in the information provision system, such as the information provision apparatus 10 and 60, the communication activation apparatus, the portable terminal, and the adjustment communication apparatus. The present disclosure may be achieved by the various kinds of manners, such as a program for causing a computer to achieve each of the above functions, a medium storing the program, or a method employed in each of the functions.

## Claims

1. An information provision apparatus (10, 60) configured to provide information using a sound wave, comprising:
a wireless communicator unit (14) configured to be enabled to perform wireless transmission and reception of data with a communication apparatus (50) other than the information provision apparatus;
an information signal generator unit (11) configured to be enabled to perform data communication with the communication apparatus through the wireless communicator unit, the information signal generator unit being further configured to generate an information signal containing information on a provision target;
a converter unit (13) configured to convert the information signal generated by the information signal generator unit into a sound wave and to output the generated sound wave;
a receiver unit (13, 61) configured to be enabled to receive a signal transmitted using a specific wireless transmission medium from a signal output apparatus (40, 70) other than the information provision apparatus; and
an operation controller unit (15) configured to execute an operation control process which controls an operation state of the wireless communicator unit based on a signal received by the receiver unit,
the operation controller unit including an activation process which causes the wireless communicator unit to transition into a state enabling wireless transmission and reception of data with the communication apparatus in response to that an activation signal transmitted from the signal output apparatus is received by the receiver unit.

2. The information provision apparatus according to claim 1, wherein
the operation controller unit includes a deactivation process which causes the wireless communicator unit to transition into a state disabling wireless transmission and reception of data with the communication apparatus in response to that a deactivation signal transmitted from the signal output apparatus is received by the receiver unit.

3. The information provision apparatus according to claim 1 or claim 2, wherein
the wireless communicator unit is caused to transition into a state disabling wireless transmission and reception of data with the communication apparatus in response to that a specified period of time elapses since the activation process is started by the operation controller unit.

4. The information provision apparatus (10) according to any one of claims 1 to 3, wherein
the specific wireless transmission medium is a sound wave.

5. The information provision apparatus according to claim 4, wherein
the converter unit (13) is further configured to function also as the receiver unit (13) by including a function which receives a sound wave, converts the sound wave into an electrical signal, and outputs the electrical signal to the operation controller unit.

6. The information provision apparatus according to claim 5, wherein:
the information signal generator unit is configured to generate the information signal where none-sound durations take place periodically, wherein each none-sound duration is a duration in which none of sound wave is outputted by the converter unit; and
the operation controller unit is configured to execute the operation control process based on an electrical signal inputted from the converter unit during the none-sound duration.

7. The information provision apparatus according to claim 6, wherein:
the information signal generator unit is configured to generate the information signal to be formed with pulses according to a sound source code having a predetermined number of bits each having either a first logical value or a second logical value to express the information on the provision target,
the first logical value being a one of "1" and "0",
the second logical value being a different one of "1" and "0" different from the first logical value,
wherein a pulse is generated to the first logical value and none of pulse is generated to the second logical value;
the sound source code contains a specific data region having consecutive identical bit values of the second logical values, the specific data region providing a duration in which none of pulse is generated; and
at least one none-sound duration among the none-sound durations taking place in the information signal is the duration in which none of pulse is generated, provided by the specific data region in the sound source code.

8. The information provision apparatus (60) according to any one of claims 1 to 3, wherein
the specific wireless transmission medium is a light.

9. An information provision system (1) including an information provision apparatus (10, 60) configured to provide information using a sound wave and a signal output apparatus (40, 70) configured to be enabled to transmit a signal using a specific wireless transmission medium to the information provision apparatus,
the information provision apparatus comprising:
a wireless communicator unit (14) configured to be enabled to perform wireless transmission and reception of data with a communication apparatus (50) other than the information provision apparatus;
an information signal generator unit (11) configured to be enabled to perform data communication with the communication apparatus through the wireless communicator unit, the information signal generator unit being further configured to generate an information signal containing information on a provision target;
a converter unit (13) configured to convert the information signal generated by the information signal generator unit into a sound wave and to output the generated sound wave;
a receiver unit (13, 61) configured to be enabled to receive a signal transmitted using the specific wireless transmission medium from the signal output apparatus; and
an operation controller unit (15) configured to execute an operation control process which controls an operation state of the wireless communicator unit based on a signal received by the receiver unit,
the operation controller unit including an activation process which causes the wireless communicator unit to transition into a state enabling wireless transmission and reception of data with the communication apparatus in response to that an activation signal transmitted from the signal output apparatus is received by the receiver unit,
the signal output apparatus comprising:
a manipulation input unit (44) configured to receive a transmission instruction manipulation to transmit the activation signal; and
a transmitter unit (43, 71) configured to transmit the activation signal using the specific wireless transmission medium in response to that the transmission instruction manipulation is received by the manipulation input unit.
